(19) Europäisches Patentamt
European Patent Office
Office européen des brevets

(11) EP 1 633 829 B1

(12) # EUROPÄISCHE PATENTSCHRIFT

(45) Veröffentlichungstag und Bekanntmachung des Hinweises auf die Patenterteilung:
**09.04.2008 Patentblatt 2008/15**

(21) Anmeldenummer: **03730141.3**

(22) Anmeldetag: **30.05.2003**

(51) Int Cl.:
***C09J 153/00*** (2006.01) ***C09J 133/00*** (2006.01)

(86) Internationale Anmeldenummer:
**PCT/EP2003/005682**

(87) Internationale Veröffentlichungsnummer:
**WO 2004/106453 (09.12.2004 Gazette 2004/50)**

(54) **POLYACRYLATHALTIGE HAFTKLEBEMASSE UND -ARTIKEL SOWIE ZUGEHÖRIGES HOTMELT-VERARBEITUNGSVERFAHREN**

POLYACRYLATE-CONTAINING ADHESIVE MASS AND ARTICLE AND CORRESPONDING HOTMELT PROCESSING METHOD

MASSE AUTO-ADHESIVE CONTENANT DES POLYACRYLATES, ARTICLES A BASE DE CELLE-CI ET METHODE DE TRAITEMENT DU HOT MELT CORRESPONDANT

(84) Benannte Vertragsstaaten:
**DE ES FR GB IT**

(43) Veröffentlichungstag der Anmeldung:
**15.03.2006 Patentblatt 2006/11**

(73) Patentinhaber: **tesa AG**
**20253 Hamburg (DE)**

(72) Erfinder:
- **HUSEMANN, Marc**
**22605 Hamburg (DE)**
- **ZÖLLNER, Stephan**
**21244 Buchholz/Nordheide (DE)**

(74) Vertreter: **Heins, Matthias**
**tesa AG**
**Quickbornstraße 24**
**20253 Hamburg (DE)**

(56) Entgegenhaltungen:
**EP-A- 1 270 699** **WO-A-01/96413**
**US-A1- 2002 168 516**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 633 829 B1

Printed by Jouve, 75001 PARIS (FR)

## Beschreibung

Die Erfindung betrifft polyacrylathaltige Haftklebemassen mit guter Kohäsion sowie damit hergestellte Haftklebeartikel, insbesondere Klebebänder und -folien. Die Erfindung bezieht sich auch auf ein verändertes Hotmelt-Verarbeitungsverfahren.

Durch immer größere Umweltauflagen und Kostendruck besteht zur Zeit der Trend zur Herstellung von Haftklebemassen ohne, oder nur mit geringen Mengen an Lösemittel. Dieses Ziel kann am einfachsten durch die Hotmelt-Technologie verwirklicht werden. Ein weiterer Vorteil dieser Technologie ist die Produktionszeitverkürzung. Hotmelt-Anlagen können Klebemassen bedeutend schneller auf Träger oder Trennpapier laminieren und so Zeit und Geld einsparen.

Zur Herstellung von Acrylathotmelts werden konventionell Acrylatmonomere in Lösung polymerisiert und anschließend das Lösemittel in einem Aufkonzentrationsprozeß im Extruder entfernt.

Die Hotmelt-Technologie stellt aber hohe Anforderungen an die Klebemassen. Für hochwertige industrielle Anwendungen werden insbesondere Polyacrylate bevorzugt, da diese transparent und witterungsstabil sind. Neben diesen Vorteilen müssen diese Acrylathaftklebemassen aber auch hohen Anforderungen im Bereich Scherfestigkeit gerecht werden. Dies wird durch Polyacrylate mit hohem Molekulargewicht, hoher Polarität und anschließender effizienter Vernetzung erreicht.

Die sehr scherfesten und polaren Haftklebemassen besitzen aber den Nachteil, daß sie für den Hotmelt-Extrusionsprozeß nicht gut geeignet sind, da hohe Anwendungstemperaturen erforderlich sind und durch die Scherung im Extruder Molekulargewicht abgebaut wird. Bedingt durch die hohe Polarität und das hohe Molekulargewicht besitzen diese Klebemassen nur eine geringe Klebkraft und einen relativ niedrigen Tack. Daher werden am einfachsten Polyacrylate mit relativ unpolaren Comonomeren und geringem mittleren Molekulargewicht verarbeitet. Hier besteht aber das Problem der sehr geringen Kohäsion (Scherfestigkeit).

Die prinzipielle Verarbeitung von acrylischen Hotmelts ist beispielsweise aus Dutch Pat. 6 606 711 und 7 009 629 bekannt. Die Kohäsion lässt sich in gewissen Grenzen durch eine effiziente UV-Vernetzung auf dem Träger steigern. Z. B. polymerisierten Guse et al. (DE 2 743 979 (1977)) Benzoinacrylate als Comonomer in den Acrylathotmelt ein und vernetzte nach der Beschichtung mit UV-Strahlung direkt auf dem Träger. Ein ähnlicher Weg zur Herstellung und Verarbeitung von Acrylathotmelts wurde von Rehmer et al. in US 5,073,611. Hier wurde Benzophenon und Acetophenon als acrylierter Photoinitiator in die Acrylatpolymerkette eingebaut und anschließend mit UV vernetzt.

Eine weitere Methode zur effizienten Vernetzung der Acrylathaftkleber ist die Copolymerisation von Acrylaten mit elektronendrückenden Gruppen. Diese stabilisieren während der Vernetzung entstehende Radikale und erzielen somit nach der entsprechenden Bestrahlung mit UV oder ESH hohe Vernetzungsgrade. Beispiele hierfür sind die von Rehmer et al. eingesetzten Tetrahydrofurylacrylate [EP 343,467 B1 (1989)], tertiäre Amine enthaltende Monomere [Ang et al. in WO 96/35725 (1995)] und tertiäres N-Butylacrylamid als Monomer [US 5,194,455 , Massow et al. (1990)].

Auf diesem Wege sind z.B. ES-vernetzbare Polyacrylatschmelzhaftkleber mit einer hohen Kohäsion zugänglich, aber zur effizienten Vernetzung wird eine relativ hohe Elektronenstrahldosis benötigt, die wiederum das Trägermaterial im Haftklebeband oder den Releaseliner schädigen kann. Zudem wird eine hohe Effizienz bei der ES-Vernetzung mit Polyacrylaten mit hohem mittleren molekulargewicht erreicht.

Durch den hohen NTBAM Anteil läßt sich zwar ebenfalls die Kohäsion durch Anstieg der Glasübergangstemperatur steigern, aber die Fließviskosität für den Hotmelt-Prozeß steigt auch an. Daher kann NTBAM nur in gewissen Grenzen zur Steigerung der Glasübergangstemperatur und zur Erniedrigung der ESH-Dosis zur Vernetzung eingesetzt werden.

Der Erfindung liegt daher die Aufgabe zugrunde, hochscherfeste Polyacrylat-Haftklebemassen mit genügend niedriger Fließviskosität für eine Hotmelt-Verarbeitung zu Haftklebeartikeln zur Verfügung zu stellen, die gleichzeitig eine gute Kohäsion zeigen und schonend ES-härtbar sind.

Überraschenderweise wurde gefunden, dass das Verblenden NTBAM-haltiger haftklebriger Polyacrylatmassen mit ein- oder zweiwertigen Metallsalzen gleichzeitig die Scherfestigkeit erhöht und eine Erniedrigung der ESH-Dosis ermöglicht. Die Fließviskosität der erfindungsgemäßen Haftklebemassen während des Hotmelt-Prozesses bleibt durch das Verblenden mit den Metallsalzen hinreichend unverändert.

Zwar beschreiben bereits US 4,354,008 von National Starch und US 4,360,638 von Rohm und Haas das Blending von Acrylathaftklebemassen mit ein- und zweiwertigen Salzen und offenbaren die reversible chelatisierende Wirkung von Metallsalzen in Verbindung mit beta-Hydroxypropyl (metha)acrylat estern (National Starch) und o-Methoxysubstituierten Arylsäuren. Durch die Metallsalze wird die Fließviskosität bei hohen Temperaturen herabgesetzt und die Scherfestigkeit bei Raumtemperatur angehoben. Dennoch ist in beiden Fällen die erzielte Scherfestigkeit relativ gering, da die beschriebenen Klebemassen nicht für eine UV- oder ESH-Vernetzung vorgesehen sind, die die Kohäsion einer Haftklebemasse auch bei höheren Temperaturen steigert.

Der Erfindung liegt die Erkenntnis zugrunde, dass die Herstellung einer hochscherfesten und für den Hotmeltprozess geeigneten Acrylathaftklebemasse vorteilhaft dadurch möglich ist, dass diese Klebemasse NTBAM als elektronendrückende Komponente und für den synergistischen Effekt gleichzeitig ein ein- oder zweiwertiges Metallsalz als chelatisierendes Reagenz enthält. NTBAM erleichtert durch die elektronen-drückende Komponente die ES-Härtung auf dem Träger. Die Metallsalze bewirken eine Erhöhung der dynamischen Glasübergangstemperatur und der Scherfestigkeit, erniedrigen aber auch die zur optimalen Vernetzung benötigten ESH Dosis. Die Eigenschaften dieses Verfahren werden im folgenden detailiert beschrieben.

Diese Erfindung umfasst das Blending von NTBAM-haltigen Acrylathaftklebemassen, inbesondere Acrylathotmelts, mit ein- oder zweiwertigen Salzen.

Die erfindungsgemäßen Haftklebemassen enthalten zu zumindestens 50 % Polymere mit folgender Zusammensetzung, wobei die Polymere konventionell über eine freie oder kontrollierte radikalische Polymerisation hergestellt wurden:

(A) Acrylsäure und Methacrylsäure-Derivate mit einem Anteil von 42-96.5 Gewichtsprozent,

$$CH_2=C(R_1)(COOR_2) \qquad (I)$$

wobei $R_1$ = H oder $CH_3$ ist und $R_2$ = eine Alkylkette mit 1-20 C-Atomen.

(B) Vinylverbindungen, Acrylate, Methacrylate mit zumindestens einer Carbonsäuregruppe mit einem Anteil von 0.5 bis 8 Gewichtsprozent

(C) Vinylverbindungen mit funktionellen Gruppen, wie Hydroxygruppen, Sulfonsäuregruppen, Estergruppen, Anhydridgruppen, Epoxygruppen, Photoinitiatoren, Amidgruppen, Aminogruppen, mit Aromaten, Heteroaromaten, Heterocyklen, Ethern, etc. mit einem Anteil von 0-30 Gewichtsprozent,

(D) N-tert.-Butylacrylamid mit einem Anteil von 3-20 Gewichtsprozent;

sowie einen effektiven Zusatz eines in dem entsprechenden Polymer löslichen ein- oder zweiwertigen Metallsalzes.

Ein- oder zweiwertige Metallsalze umfassen auch Oxide, Hydroxide oder Alkoxide. Die Salze entstammen besonders bevorzugt aus den Gruppen I A, II A, II B, I B und IV B des Periodensystems und werden vorzugsweise im Verhältnis von 1:5 bis 5:1 zu dem jeweiligen molaren Carbonssäureanteil im Polymer hinzugegeben.

Im normalen Fall werden 0,25 bis maximal 8 Gewichtsanteile zum Polyacrylat hinzugegeben, wobei der bevorzugte Bereich zwischen 3 und 6 Gewichtsanteilen liegt.

Als Metalle kommen bevorzugt Lithium, Natrium , Kalium, Calcium, Magnesium, Titan, Zink, Zirkonium, Barium Cadmium, Strontium zu Einsatz, wobei die Metallsalze als Oxide, Hydroxyde, Alkoxide, als basische, acide oder neutrale Salze eingesetzt werden, wobei jeweils die Grundvoraussetzung der Löslichkeit in dem jeweiligen Polymer erfüllt werden muss.

Weitere Beispiele für erfindungsgemäß einsetzbare Salze sind organische Salze, wie Zinkacetat und Magnesiumcitrat. Als weitere organische Gegenionen lassen sich Glutamate, Formiate, Carbonate, Silicate, Glycoate, Octoate, Gluconate, Oxylate, und Lactate einsetzen.

Als bevorzugte Metallverbindungen werden Zink-(II)-chlorid, Kaliumiodid und Calcium-(II)-bromid eingesetzt.

Die Monomere zur Herstellung der Polyacrylathaftklebemassen werden bevorzugt dermaßen gewählt, daß die resultierenden Polymere bei Raumtemperatur oder höheren Temperaturen als Haftklebemassen eingesetzt werden können, insbesondere derart, daß die resultierenden Polymere haftklebende Eigenschaften entsprechend des "Handbook of Pressure Sensitive Adhesive Technology" von Donatas Satas (van Nostrand, New York 1989) besitzen.

In einer weiteren erfinderischen Auslegung wird die Comonomerzusammensetzung derart gewählt, dass sich die Haftklebemassen als Hitze-aktivierbare Haftklebemassen einsetzen lassen.

In einer sehr bevorzugten Weise werden als Monomere (A) Acryl- oder Methacrylmonomere eingesetzt, die aus Acryl- und Methacrylsäureester mit Alkylgruppen aus 4 bis 14 C-Atomen bestehen, bevorzugt 4 bis 9 C-Atomen umfassen. Spezifische Beispiele, ohne sich durch diese Aufzählung einschränken zu wollen, sind Methlacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat.
Weitere einzusetzende Verbindungsklassen sind monofunktionelle Acrylate bzw. Methacrylate von überbrückten Cycloalkylalkoholen, bestehend aus zumindestens 6 C-Atomen. Die Cycloalkylalkohole können auch substituiert sein. Spezifische Beispiele sind Cyclohexylmethacrylate, Isobornylacrylat, Isobornylmethacrylate und 3,5-Dimethyladamantylacrylat.

In einer bevorzugten Auslegung werden als Monomere (B) Acrylsäure und Methacrylsäure eingesetzt. Weitere bevorzugte Beispiele sind Itaconsäure, β-Acryloyloxypropionsäure, Trichloracrylsäure, Fumarsäure, Crotonsäure, Aconitsäure, Dimethylacrylsäure oder Vinylessigsäure, wobei diese Aufzählung nicht abschließend ist.

In einer Vorgehensweise werden als Monomere (C) Vinylverbindungen, Acrylate und/oder Methacrylate eingesetzt, die polare Gruppen wie Carboxylreste, Sulfon- und Phosphonsäure, Hydroxyreste, Lactam und Lacton, N-substituiertes Amid, N-substituiertes Amin, Carbamat-, Epoxy-, Thiol-, Alkoxy-. Cyanreste, Ether, Halogenide oder ähnliches tragen.

Moderate basische Monomere sind z.B. N,N-Dialkylsubstituierte Amide, wie z.B. N,N-Dimethylacrylamid, N, N-Dimethylmethylmethacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid, wobei diese Aufzählung nicht abschließend ist.

Weitere bevorzugte Beispiele als Monomere (C) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Glycerylmethacrylat, 6-Hydroxyhexylmethacrylat, Tetrahydrofufurylacrlyat, wobei diese Aufzählung nicht abschließend ist.

In einer weiteren sehr bevorzugten Vorgehensweise werden als Monomere (C) Vinylester, Vinylether, Vinylhalogenide, Vinylidenhalogenide, Vinylverbindungen mit aromatischen Cyclen und Heterocyclen in $\alpha$-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

Weiterhin werden in einer weiteren Vorgehensweise Photoinitiatoren mit einer copolymerisierbaren Doppelbindung als Monomere (C) eingesetzt. Als Photoinitiatoren sind Norrish-I- und -II-Photoinitiatoren geeignet. Beispiele sind z.B. Benzoinacrylat und ein acryliertes Benzophenon der Fa. UCB (Ebecryl P 36®). Im Prinzip können alle dem Fachmann bekannten Photoinitiatoren copolymerisiert werden, die das Polymer über einen Radikalmechnismus unter UV-Bestrahlung vernetzen können. Ein Überblick über mögliche einsetzbare Photoinitiatoren die mit einer Doppelbindung funktionalisiert werden können, wird in Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London, genannt werden.

In einer weiteren bevorzugten Vorgehensweise werden zu den beschriebenen Monomeren (A) und (B) copolymerisierbare Verbindungen (C) hinzugesetzt, die eine hohe statische Glasübergangstemperatur besitzen. Als Komponenten eigenen sich aromatische Vinylverbindungen, wie z.B. Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Zur Erzielung einer für Häftklebemassen bevorzugten Glasübergangstemperatur $T_G$ der Polymere von $T_G \leq$ 25 °C werden entsprechend dem vorstehend gesagten die Monomere sehr bevorzugt derart ausgesucht und die mengenmäßige Zusammensetzung der Monomermischung vorteilhaft derart gewählt, daß sich nach der ***Fox***-Gleichung (G1) (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \text{(G1}$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Zur Herstellung der Poly(meth)acrylathaftklebemassen werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Fa. DuPont) oder Azodisobutyronitril (AIBN) verwendet.

Die mittleren Molekulargewichte $M_w$ der bei der radikalischen Polymerisation entstehenden Haftklebemassen werden sehr bevorzugt derart gewählt, daß sie in einem Bereich von 200.000 bis 4.000.000 g/mol liegen; speziell für die weitere Verwendung als Schmelzhaftkleber werden Haftklebemassen mit mittleren Molekulargewichten $M_w$ von 400.000 bis 1.200.000 g/mol hergestellt. Die Bestimmung des mittleren Molekulargewichtes erfolgt über Größenausschlußchromatographie (GPC) oder Matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z.B. Hexan, Heptan, Octan, Isooctan), aromatische Kohlenwasserstoffe (z.B. Benzol, Toluol, Xylol), Ester (z.B. Essigsäureethylester, Essigsäurepropyl-, -butyl- oder '-hexylester), halogenierte Kohlenwasserstoffe (z.B. Chlorbenzol), Alkanole (z.B. Methanol, Ethanol, Ethylenglycol, Ethylenglycolmonomethylether) und Ether (z.B. Diethylether, Dibutylether) oder Gemische davon. Die wäßrigen Polymerisationsreaktionen können mit einem mit Wasser mischbaren oder hydrophilen CoLösungsmittel versetzt werden, um zu gewährleisten, daß das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 2 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Für die Herstellung kann es auch von Vorteil sein, die Acrylathaftklebemassen in Substanz zu polymerisieren. Hier eignet sich insbesondere die Präpolymerisationstechnik einzusetzen. Die Polymerisation wird mit UV-Licht iniitiert, aber nur zu einem geringen Umsatz ca. 10 - 30 % geführt. Anschließend kann dieser Polymersirup z.B. in Folien eingeschweisst werden (im einfachsten Fall Eiswürfel) und dann in Wasser zu hohem Umsatz durchpolymerisiert werden. Diese Pellets lassen sich dann als Acrylatschmelzkleber einsetzen, wobei für den Aufschmelzvorgang besonders bevorzugt Folienmaterialien eingesetzt werden, die mit dem Polyacrylat kompatibel sind.

Ein anderes vorteilhaftes Herstellungsverfahren für die Poly(meth)acrylathaftklebemassen ist die anionische Polymerisation. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird in diesem Fall im allgemeinen durch die Struktur $P_L$(A)-Me repräsentiert, wobei Me ein Metall der Gruppe I, wie z.B. Lithium, Natrium oder Kalium, und $P_L$(A) ein wachsendes Polymer aus den Acrylatmonomeren ist. Die Molmasse des herzustellenden Polymers wird durch das Verhältnis von Initiatorkonzentration zu Monomerkonzentration kontrolliert. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, daß Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Zur Herstellung von Polyacrylathaftklebemassen mit einer engen Molekulargewichtsverteilung eignen sich auch kontrollierte radikalische Polymerisationsmethoden.

Als kontrollierte radikalische Polymerisationsmethode können beispielsweise Nitroxidgesteuerte Polymerisationen durchgeführt werden. Zur Radikalstabilisierung werden in günstiger Vorgehensweise Nitroxide des Typs (Va) oder (Vb) eingesetzt:

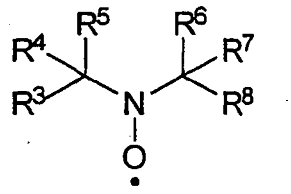

(Va)

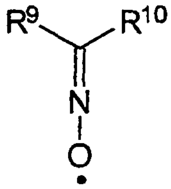

(Vb)

wobei $R^3$, $R^4$, $R^5$, $R^6$, $R^7$, $R^8$, $R^9$, $R^{10}$ unabhängig voneinander folgende Verbindungen oder Atome bedeuten:

i) Halogenide, wie z.B. Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester $-COOR^{11}$, Alkoxide $-OR^{12}$ und/oder Phosphonate $-PC(OR^{13})_2$,

wobei $R^{11}$, $R^{12}$ oder $R^{13}$ für Reste aus der Gruppe ii) stehen.

Verbindungen der Formeln (Va) oder (Vb) können auch an Polymerketten jeglicher Art gebunden sein (vorrangig in dem Sinne, daß zumindest einer der oben genannten Reste eine derartige Polymerkette darstellt) und somit zum Aufbau von Polyacrylathaftklebemassen genutzt werden.
Mehr bevorzugt werden kontrollierte Regler für die Polymerisation von Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxy (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl prapyl)-1-diethylphosphono-1-methyl ethyl Nitroxid
- Di-t-Butylnitroxid
- Diphenylnitroxid
- t-Butyl-t-amyl Nitroxid

Eine Reihe weiterer Polymerisationsmethoden, nach denen die Haftklebemassen in alternativer Vorgehensweise hergestellt werden können, lassen sich aus dem Stand der Technik wählen:
US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches

Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode läßt sich in vorteilhafter Weise zur Synthese der Polyacrylathaftklebemassen die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841

346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Zur Weiterentwicklung können den erfinderischen Haftklebemassen Harze beigemischt sein. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Weiterhin können optional Weichmacher (Plastifizierungsmittel), weitere Füllstoffe (wie. z. B. Fasern, Ruß, Zinkoxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z.B. in Form von primären und sekundären Antioxidantien oder in Form von Lichtschutzmitteln zugesetzt sein.

Zusätzlich können Vernetzer und Promotoren zur Vernetzung beigemischt werden. Geeignete Vernetzer für die Elektronenstrahlvernetzung sind beispielsweise bi- oder multifunktionelle Acrylate. Geeignete Vernetzer sind im Stand der Technik bekannt. Als Vernetzer sind z.B. SR 610 (Fa. Sartomer), PETIA, PETA, Ebecryl 11 (Fa. UCB) und andere multifunktionelle Acrylate bzw. Methacrylate, wie z.B. SR 350 der Fa. Sartomer einsetzbar.

Zur Herstellung von Schmelzhaftklebebändern werden die oben beschriebenen Polymere bevorzugt als Hotmelt-Systeme (also aus der Schmelze) beschichtet. Für das Herstellungsverfahren kann es daher erforderlich sein, das Lösemittel von der Haftklebemasse zu entfernen. Hier können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösemittel oder Wasser wird bevorzugt über mehrere Vakuumstufen abdestilliert. Zudem wird je nach Destillationstemperatur des Lösemittels gegengeheizt. Die Restlösemittelanteile betragen bevorzugt < 1 %, mehr bevorzugt < 0,5 % und sehr bevorzugt < 0,2 %. Der Hotmelt wird aus der Schmelze weiterverarbeitet.

In einem bevorzugten Verfahren werden die Metallsalzzusätze kurz vor der Aufkonzentration hinzugegeben oder als Feststoff zu dem Hot-melt hinzukompoundiert.

Die auf diese Weise abgemischten Acrylathaftklebemassen werden als Hotmelt auf einen Träger (BOPP, PET, Vlies, PVC etc.) oder Trennpapier (Glassine, HDPE, LDPE) aufgetragen und anschließend zur Kohäsionssteigerung vorzugsweise mit ESH vernetzt.

Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20, bevorzugt 25 oder 30 und 100 kGy.

Insbesondere für die ESH wird durch die oben beschriebene Haftklebemasse eine geringere Dosis benötigt, so daß sich auch neue Produkte mit hoher Schichtdicke auf ESH empfindlichen Trägern vernetzen lassen. So werden silikonisierte Trennpapiere weniger durch ESH geschädigt und die Abrollkräfte des entsprechenden Haftklebebandes bleiben nahezu konstant. Auf diesem Weg lassen sich sehr einfach Transfer-Tapes herstellen.

Die klebtechnische Ausprüfung ergibt eine gesteigerte Kohäsion, sowohl bei Raumtemperatur als auch bei 80°C bei gleichzeitig niedriger ESH-Dosis. Obwohl sie grundsätzlich unter Verschlechterung der Ausführungsbeispiele unterbleiben könnte, ist die ES-Härtung dennoch für die Generierung hochscherfester Haftklebebänder dringend zu empfehlen, wobei die Dosis für die ES-Härtung herabgesetzt werden kann.

Weiterhin wird auch bei höheren ESH-Dosen die Scherfestigkeit der einzelnen Haftklebemassen verbessert. Durch die Verringerung der ESH-Dosis wird das Problem der Liner-Schädigung minimiert. Bei hohen Grenzdosen an der Trennpapier-Oberfläche kommt es sonst zu Schädigungen, die das Haftklebeband am Abrollen hindern. Das Haftklebeband kann nur unter sehr großem Kraftaufwand oder gar nicht benutzt werden. Die Verringerung der ESH-Dosis ermöglicht eine Erniedrigung der Grenzflächendosis am Trägermaterial, so dass der Liner bedeutend weniger geschädigt wird und immer noch gut als Trennmaterial fungieren kann. Dieses Phänomen wird auch auf BOPP und PVC-Trägem beobachtet. PVC Träger verfärben sich stark unter Elektronenstrahlung, so dass auch hier eine Verringerung der ES-Dosis wünschenswert ist. BOPP Träger werden durch ES bei hohen Dosen ebenfalls komplett zerstört.

Durch die erfindungsgemäßen Maßnahmen lassen sich also neue Haftklebebandprodukte auf Acrylatbasis

herstellen, die bisher nur schwierig oder in einer bedeutend schlechteren Qualität zugänglich waren, wie z.B. Fixe mit einem hohen Masseauftrag von über 100 g/m$^2$. Die erfindungsgemäßen Haftklebemassen zeigen eine gute Kohäsion.

Die Metallsalz-Zusätze lassen sich auch variieren. Neben den geprüften Salzen lassen sich auch eine Vielzahl unterschiedlicher Salze mit dem gleichen Effekt einsetzen, wie dies der Fachmann im Rahmen seines fachlichen Könnens ausprüfen kann.

Weiterhin sind prinzipiell nicht nur reine Acrylathaftklebemassen sondern auch abgemischte Haftklebemassen für das Blending mit Metallsalzen geeignet. Hier wird auch der Effekt der Kohäsionssteigerung bei geringerer ESH-Dosis beobachtet. Haftklebemassen können mit Vernetzern, mit Weichmachern, mit einer Vielzahl von Harzen und Füllstoffen abgemischt werden. Hierfür werden nachfolgend Beispiele angegeben.

Die Erfindung wird im folgenden anhand von Beispielen näher beschrieben. Dabei wird auch bezug auf Abbildungen genommen, die folgendes zeigen:

Abb. 1: Temperatursweep-Kurven zur Bestimmung der dynamischen Glasübergangstemperatur einer haftklebrigen Polyacrylat-Grundhaftklebemasse mit und ohne Salz-Verblendung;

Abb. 2: Frequenzsweep-Kurven zur rheometrischen Bestimmung der Fließviskosität einer haftklebrigen Polyacrylat-Grundhaftklebemasse mit und ohne Salz-Verblendung.

BEISPIELTEIL

Ziel dieser Erfindung ist die Herstellung hochscherfester Acrylathaftklebemassen bei geringer ESH Dosis für die Vernetzung auf dem Träger. Zu diesem Zweck wurden zunächst verschiedene Polyacrylate mit haftklebenden Eigenschaften hergestellt. Die Polymere wurden konventionell via einer freien radikalischen Polymerisation im 2 L Glasreaktor in Aceton als Lösemittel hergestellt. Die Polymere besaßen folgende Zusammensetzung (Tab. 1):

Tabelle 1

| Beispiel | AS[%] | 2-EHA [%] | n-BuA [%] | NTBAM[%] | MSA[%] |
|---|---|---|---|---|---|
| 1 | 2 | 44.5 | 44.5 | 8 | 1 |
| 2 | 1 | 86 | 0 | 12 | 1 |
| 3 | 3 | 60 | 30 | 6 | 1 |
| alle Prozentangaben in Gewichtsprozent | | | | | |

Die Beispiele 1,2 und 3 enthalten einen relativ geringen Anteil polarer Comonomere, wie z.B. Acrylsäure. Daher sind diese Polymere für den Hotmelt-Prozeß - auch durch die geringe Fließviskosität bei höheren Temperaturen - sehr gut geeignet. Vielmehr enthalten diese Polymere NTBAM als Comonomer. NTBAM besitzt elektronendrückende Eigenschaften und fördert somit die ES-Vernetzung durch die Stabilisierung der Radikale. Die synthetisierten Beispiele 1-3 gelten als Ausgangsklebemassen und wurden daher einer klebetechnischen Ausprüfung unterzogen. Zu dieser Ausprüfung wurden von den Klebemassen Lappenmuster hergestellt, die dann mit unterschiedlicher ESH Dosis mit 230 kV Beschleunigungsspannung vollständig vernetzt wurden. Der Masseauftrag der Haftklebemasse auf dem Trennpapierträger betrug jeweils 50 g/m$^2$. Die genauen Ausprüfmethoden sind im Anhang beschrieben.

Tabelle 2

| Beispiel | ESH Dosis | Gelanteil | KK-Stahl [N/cm] | Bruch SSZ | SSZ RT 10 N [min] | SSZ 80°C 10 N [min] |
|---|---|---|---|---|---|---|
| 1* | 0 kGy | 0 % | 5.9 | K | 35 | 3 |
| 1 | 20 kGy | 26 % | 5.2 | K | 2025 | 10 |
| 2 | 20 kGy | 21 % | 5.3 | K | 1650 | 10 |
| 3 | 20 kGy | 25 % | 5.0 | K | 2580 | 25 |
| 1 | 30 kGy | 55 % | 4.8 | A | 7200 | 375 |
| 2’ | 30 kGy | 46 % | 5.0 | K | 3675 | 145 |
| 3’ | 30 kGy | 51 % | 4.8 | A | 5235 | 305 |

Beispiel 1* verdeutlicht, daß zur Generierung einer scherfesten Klebemasse eine ES-Härtung essentiell ist. Bei einem Gelanteil von 0% versagt diese Klebemasse mit 35 Minuten bei Raumtemperatur und 3 Minuten im Wärmeschertest bei 80°C sehr schnell. Ferner kann man Tabelle 2 entnehmen, dass mit 20 kGy alle Proben immer noch untervernetzt sind. Der Gelanteil ist mit 21 - 26 % relativ gering und die Proben brechen alle kohäsiv von der Stahlplatte im Schertest. Es werden bei Raumtemperatur Scherstandzeiten von 1650 - 2580 Minuten mit 10 N Scherkraft erreicht. Bei 80°C nimmt die Kohäsion noch stärker ab und die Scherteste brechen kohäsiv nach 10 - 25 Minuten. Für ein scherfesteres Produkt wurde die ESH Dosis um 50 % von 20 auf 30 kGy heraufgesetzt. Mit deutlich höherem Gelanteil erreicht man nun Werte bei Raumtemperatur von 3675 bis 7200. Auch die Scherstandzeiten im Wärmeschertest verbessern sich auf 145 bis 375 Minuten, wobei diese Werte absolut betrachtet noch nicht hoch genug für ein sehr scherfestes Klebeband liegen.

Zur Optimierung wurden nun Salze zu diesen Beispielen beigemischt. Die Metallsalze wirken als Koordinatoren zwischen die Carbonssäuregruppen und erhöhen die dynamische Glasübergangstemperatur des Polymers. Dieser Effekt ist sehr ungewöhnlich, da bei einer normalen ES-Vernetzung die dynamische Glasübergangstemperatur vom Vernetzungsgrad nahezu unabhängig ist. Daher sollte die Erhöhung eine Verschiebung in den kohäsiven Bereich bewirken und die für die optimale Vernetzung benötigte ESH Dosis verringern. Um diesen Effekt zu überprüfen, wurde zunächst Beispiel 1 mit verschiedenen Metallsalzen in unterschiedlichen Mengen abgemischt und dieser Effekt rheologisch untersucht.

In Tabelle 3 sind nochmals die einzelnen Abmischungen aufgelistet. Die Prozentangaben beziehen sich auf Mengenanteile.

Tabelle 3

| Beispiel | Mengenanteil an Beispiel 1 | Metallsalze |
|---|---|---|
| 1 Na | 3.0 | NaI |
| 1Li | 1.8 | LiBr |
| 1 Ca | 3.9 | $CaBr_2$ |
| 1Zn | 2.8 | $ZnCl_2$ |

Zunächst wurden Temperatursweeps (siehe Testmethode D) zur Bestimmung der dynamischen Glasübergangstemperatur von der Ausgangssubstanz Beispiel 1 und den damit abgemischten Blends durchgeführt. Der Abbildung 1 sind die Ergebnisse zu entnehmen:

NaI, LiBr und $ZnCl_2$ zeigen als Zusätze alle den gleichen Trend. Gegenüber der Ausgangsverbindung Beispiel 1 steigt die Glasübergangstemperatur im gewünschtem Maße an. Je nach Metallsalz und Mengenanteil sind die Effekt unterschiedlich stark. Demgegenüber hat $CaBr_2$ als Additiv einen nahezu gegenteiligen Effekt. Die dynamische Glasübergangstemperatur sinkt gegenüber Beispiel 1 ein wenig. Zur Vervollständigung der rheologischen Untersuchen wurden ebenfalls Frequenzsweeps bei 130°C durchgeführt. Hier sollte die Fließviskosität bei einer für den Hotmelt-Prozess relevanten Verarbeitungstemperatur ermittelt werden.

Die Ergebnisse dieser Untersuchungen sind graphisch in Abbildung 2 dargestellt.

Abbildung 2 ist zu entnehmen, daß bei einer Hotmelt-Verarbeitungstemperatur von 130°C die Fließviskosität in nahezu allen Fällen durch die Additivierung mit Metallsalzen ansteigt. Dennoch sind die Effekte, insbesondere bei Frequenzen mit mehr als 1 rad/s relativ gering. Einzige Ausnahme ist die Additivierung mit $ZnCl_2$. Hier liegt die Fließviskosität bei geringer Frequenz etwas unterhalb der Basismasse Beispiel 1. Bedingt durch die geringe Ausgangsviskosität des Beispiel 1 sind aber alle Polymerabmischungen gut für den Hotmelt-Prozess geeignet.

Im folgenden sollen zunächst die klebtechnischen Auswirkungen der Additivierung in Abhängigkeit von der ESH-Dosis untersucht werden. Die Klebemassen wurden analog zur Ausgangsmasse mit 50 $g/m^2$ Masseauftrag auf einen silikonisierten Trennpapier-Träger aufgetragen und dann anschließend mit unterschiedlichen ESH-Dosen vernetzt. Die Ergebnisse sind in Tabelle 4 dargestellt.

Tabelle 4

| Beispiel | ESH Dosis | Gelanteil | KK-Stahl [N/cm] | Bruch SSZ | SSZ RT 10 N [min] | SSZ 80°C 10 N [min] |
|---|---|---|---|---|---|---|
| 1Li* | OkGy | 0 % | 5.8 | K | 45 | 3 |
| 1 Na | 20 kGy | 23 % | 5.1 | K | 7895 | 745 |
| 1 Li | 20 kGy | 21 % | 5.3 | K | 6540 | 515 |

(fortgesetzt)

| Tabelle 4 | | | | | | |
|---|---|---|---|---|---|---|
| Beispiel | ESH Dosis | Gelanteil | KK-Stahl [N/cm] | Bruch SSZ | SSZ RT 10 N [min] | SSZ 80°C 10 N [min] |
| 1 Ca | 20 kGy | 27% | 4.9 | K | 8580 | 1835 |
| 1Zn | 20 kGy | 29 % | 5.2 | K | 10000+ | 1050 |
| 1 Na' | 30 kGy | 49% | 4.8 | A | 10000+ | 1590 |
| 1Li' | 30 kGy | 48% | 4.9 | A | 10000+ | 2035 |
| 1 Ca' | 30 kGy | 52 % | 4.7 | A | 10000+ | 10000+ |
| 1Zn' | 30 kGy | 54 % | 4.9 | A | 10000+ | 2580 |

Der Vergleich der unbestrahlten Muster 1Li* mit 1* zeigt die relativ geringen Auswirkungen der Additivierung ohne ES-Härtung. Auch mit 1.8 % LiBr versagt die Klebemasse 1Li* ähnlich schnell bei Raumtemperatur und bei 80°C. Vernetzt man dagegen die abgemischten Klebemassen mit 20 kGy ESH-Dosis, so werden ähnliche Gelwerte wie ohne Metallsalz-Zusatz erreicht (21-29%). Betrachtet man aber die Scherstandzeiten und vergleicht diese mit Tabelle 2, so kann man eine deutliche Steigerung erkennen. Mit einer ESH Dosis von 20 kGy und relativ geringen Gelanteilen von um die 25 % wird hier bereits ein Scherstandzeitniveau erreicht, welches dem des Beispiels 1 mit 30 kGy Dosis und einem Gelwert von 55 % entspricht. Somit wird das gleiche Niveau bei einer um 50 % niedrigeren ESH-Dosis erreicht. In einigen Fällen (z.B. $ZnCl_2$) werden sogar mit 20 kGy bedeutend bessere Scherstandzeiten erreicht, die dem Niveau einer hochscherfesten Klebemasse auch bei erhöhten Temperaturen von 80°C entsprechen. Zum Vergleich wurden die mit Metallsalzen geblendeten Klebemassen ebenfalls mit 30 kGy Dosis bestrahlt und klebtechnisch ausgeprüft. Die Gelwerte von 48 - 54 % zeigen keinen signifikanten Unterschied zu der Klebemasse 1'. Dagegen wurde mit den Scherstandzeiten nochmals ein erhöhtes Niveau realisiert. Insbesondere die Scherstandzeiten mit 10 N Scherkraft bei 80°C verbesserten sich nochmals deutlich.

Ob dieser Effekt auch auf andere Polyacrylate zutrifft, sollte anhand der Beispiele 2 und 3 untersucht werden. Hier focussierte man sich auf die Abmischungen mit $CaBr_2$, weil dieses Salz die besten Ergebnisse in den vorherigen klebtechnischen Ausprüfungen gezeigt hatte. Die eingesetzten Gewichtsanteile sind in Tabelle 5 aufgelistet:

| Tabelle 5 | | |
|---|---|---|
| Beispiel | Mengenanteil an Beispiel 2+3 | Metallsalz |
| 2Ca | 2.0 | $CaBr_2$ |
| 2Ca# | 4.0 | $CaBr_2$ |
| 3Ca | 5.8 | $CaBr_2$ |
| 3Ca# | 2.9 | $CaBr_2$ |

Nach der Abmischung wurden die Klebemassen analog zu dem mit Metallsalzen abgemischten Beispiel 1 behandelt. Nach der Laminierung auf dem silikonisierten Trennpapier Träger wurde mit jeweils 20 und 30 kGy Dosis vernetzt und dann diese Lappenmuster klebtechnisch ausgeprüft. Die Ergebnisse dieser Ausprüfungen sind in Tabelle 6 zusammengefaßt.

| Tabelle 6 | | | | | | |
|---|---|---|---|---|---|---|
| Beispiel | ESH Dosis | Gelanteil | KK-Stahl [N/cm] | Bruch SSZ | SSZ RT 10 N [min] | SSZ 80°C 10 N [min] |
| 2Ca | 20 kGy | 22 % | 5.2 | K | 3850 | 465 |
| 2Ca# | 20 kGy | 20 % | 5.2 | K | 3645 | 450 |
| 2Ca' | 30 kGy | 52 % | 4.8 | A | 9890 | 2585 |
| 2Ca#' | 30 kGy | 49 % | 4.9 | A | 10000+ | 2840 |
| 3Ca | 20 kGy | 25 % | 4.9 | K | 5030 | 740 |
| 3Ca# | 20 kGy | 27 % | 4.7 | K | 6215 | 625 |

(fortgesetzt)

| Tabelle 6 | | | | | | |
|---|---|---|---|---|---|---|
| Beispiel | ESH Dosis | Gelanteil | KK-Stahl [N/cm] | Bruch SSZ | SSZ RT 10 N [min] | SSZ 80°C 10 N [min] |
| 3Ca' | 30 kGy | 55 % | 4.6 | A | 10000+ | 4565 |
| 3Ca#' | 30 kGy | 58 % | 4.4 | A | 10000+ | 3870 |

Vergleicht man die Ergebnisse mit den klebtechnischen Ausprüfungen aus Tabelle 2, so erkennt man eine allgemein deutliche Verbesserung der Scherfestigkeit. In Analogie zu den Ergebnissen mit Beispiel 1 werden wiederum für das Beispiel 2 und 3 bei geringerer ESH-Dosis bedeutend bessere Scherstandzeiten gemessen. Selbst ein Vergleich mit der 30 kGy Stufe ohne Metallsalz Zusatz zeigt, daß mit $CaBr_2$ ein zumindestens gleich gutes Scherstandzeitniveau erreicht wird. Vergleicht man die Wärmescherstandzeiten, so verdoppeln (Beispiel 3) oder verdreifachen sich diese (Beispiel 2). Somit verbessert auch für die Beispiele 2 und 3 der Metallsalz-Zusatz die Scherfestigkeit der Haftklebemassen schon bei geringerer ESH-Dosis. Erhöht man die Dosis auf 30 kGy, so steigert sich für diese Beispiele auch nochmals das Scherstandzeitniveau.

Dagegen hat der Mengenanteil Salz eher einen geringeren Einfluß. Von 2Ca zu 2Ca# wird der Anteil $CaBr_2$ verdoppelt, aber der Einfluß auf die Scherstandzeiten und dem Gelanteil ist relativ gering. Der Gelanteil sinkt um etwa 2 % ab und die Scherstandzeiten verschlechtern sich tendenziell. Die Fehler liegen im Rahmen der Messungenauigkeiten. Für 3Ca und 3Ca# ergibt sich ein ähnliches Bild.
Zusammenfassend wird die Herstellung von hochscherfesten Haftklebemassen mit der Hotmelt-Technologie durch den Zusatz von Metallsalzen erleichtert.

Testmethoden

Folgende Testmethoden wurden angewendet um die klebtechnischen Eigenschaften der hergestellten Haftklebemassen zu evaluieren.

Scherfestigkeit (Test A)

Ein 13 mm breiter Streifen des Klebebandes wurde, nachdem auf Aluminiumfolie umkaschiert wurde, auf eine glatte Stahloberfläche, die dreimal mit Aceton und einmal mit Isopropanol gereinigt wurde, aufgebracht. Die Auftragsfläche betrug 20*13 mm (Länge*Breite). Anschließend wurde mit 2 kg Anpreßdruck das Klebeband viermal auf den Stahlträger gedrückt. Bei Raumtemperatur oder bei 80°C wurde ein 1 kg Gewicht an dem Klebeband befestigt. Die gemessenen Scherstandzeiten sind in Minuten angegeben und entsprechen dem Mittelwert aus drei Messungen.

180° Klebkrafttest (Test B)

Ein 20 mm breiter Streifen einer auf einer Polyester gecoateten Acrylat-haftklebemasse wurde auf Stahl Platten aufgebracht. Der Haftklebestreifen wurde zweimal mit einem 2 kg Gewicht auf das Substrat aufgedrückt. Das Klebeband wurde anschließend sofort mit 300 mm/min und im 180° Winkel vom Substrat abgezogen. Die Stahl Platten wurden zweimal mit Aceton und einmal mit Isopropanol gewaschen. Die Meßergebnisse sind in N/cm angegeben und sind gemittelt aus drei Messungen. Alle Messungen wurden bei Raumtemperatur unter klimatisierten Bedingungen durchgeführt.

Bestimmung des Gelanteils (Test C)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert bestimmt.

Rheologie (Test D)

Die Messungen wurden mit dem Gerät Dynamic Stress Rheometer von Rheometrics durchgeführt. Bei 25°C wurde der Frequenzsweep von 0.1 bis 100 rad/s abgefahren. Der Temperatursweep wurde bei 10 rad/s in einem Temperaturbereich von -25°C bis 130°C gemessen. Alle Experimente wurden mit paralleler Plattenanordnung durchgeführt.

Gelpermeationschromatographie GPC (Test E)

Die Bestimmung des mittleren Molekulargewichtes $M_w$ und der Polydisperisität PD erfolgte über die Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 μ, $10^3$ A, ID 8,0 mm x 50 mm verwendet. Zur Auftrennung wurden die Säulen PSS-SDV, 5 μ, $10^3$ sowie $10^5$ und $10^6$ mit jeweils ID 8,0 mm x 300 mm eingesetzt. Die Probenkonzentration betrug 4 g/l, die Durchflußmenge 1,0 ml pro Minute. Es wurde gegen PMMA-Standards gemessen.

Für die Elektronenbestrahlung erfolgte die Vernetzung mit einem Gerät der Fa. Electron Crosslinking AB, Halmstad, Schweden. Das beschichtete Haftklebeband wurde dabei über eine standardmäßig vorhandene Kühlwalze unter dem Lenard-Fenster des Beschleunigers hindurch geführt. Dabei wurde in der Bestrahlungszone der Luftsauerstoff durch Spülen mit reinem Stickstoff verdrängt. Die Bahngeschwindigkeit betrug jeweils 10 m/min. Es wurde mit einer Beschleunigungsspannung von 180 kV durchstrahlt.

**Herstellung der Proben**

Beispiel 1

Ein für radikalische Polymerisationen konventioneller 2 L-Glasreaktor wurde mit 8 g Acrylsäure, 178 g n-Butylacrylat, 178 g 2-Ethylhexylacrylat, 4 g Maleinsäureanhydrid, 32 g N-tert.-Butylacrylamid und 300 g Aceton/Isopropanol (97:3) befüllt. Nach 45 Minuten Durchleiten mit Stickstoffgas unter Rühren wurde der Reaktor auf 58°C hochgeheizt und 0.2 g Vazo 67 hinzugegeben. Anschließend wurde das äußere Heizbad auf 75°C erwärmt und die Reaktion konstant bei dieser Außentemperatur durchgeführt. Nach 1.5 h Reaktionszeit wurden wiederum 0.2 g Vazo 67 hinzugegeben. Nach 3 und 6 h wurde mit jeweils 150 g Aceton/Isopropanol Gemisch verdünnt. Zur Reduktion der Restinitiatoren wurden nach 10 h wurden 0.4 g Perkadox 16 in 10 g Aceton gelöst hinzugetropft. Die Reaktion wurde nach 22 h Reaktionszeit abgebrochen und auf Raumtemperatur abgekühlt. Die Klebemasse wurden auf einen silikonisierten Trennpapierträger aufgestrichen, im Ofen bei 120°C getrocknet und anschliessend mit ES bei unterschiedlichen Dosen (0, 20 oder 30 kGy) gehärtet. Anschliessend wurde mit den Testmethoden A, B, C ausgeprüft. Weiterhin wurde eine unvernetzte Probe für Testmethode D vorbereitet.

Beispiel 2

Es wurde analog Beispiel 1 vorgegangen. Zur Polymerisation wurden 4 g Acrylsäure, 48 g N-tert.-Butylacrylamid, 344 g 2-Ethylhexylacrylat und 4 g Maleinsäureanhydrid eingesetzt. Die Lösungsmittel- und Initiatormengen wurden beibehalten. Zur Härtung wurde das reine Polyacrylat auf dem Trennpapier Träger mit 20 oder 30 kGy Dosis behandelt. Zur Analyse wurden die Testmethoden A, B und C durchgeführt.

Beispiel 3

Es wurde analog Beispiel 1 vorgegangen. Zur Polymerisation wurden 12 g Acrylsäure, 240 g 2-Ethylhexylacrylat, 120 g n-Butylacrylat, 32 g N-tert.-Butylacrylamid und 4 g Maleinsäureanhydrid eingesetzt. Die Lösungsmittel- und Initiatormengen wurden beibehalten. Die Klebemasse wurden auf einen silikonisierten Trennpapierträger aufgestrichen, im Ofen bei 120°C getrocknet und anschließend mit ES bei unterschiedlichen Dosen (20 oder 30 kGy) gehärtet. Anschließend wurde mit den Testmethoden A, B, C ausgeprüft.

Beispiel 1Li

100 g des Polymers Beispiel 1 (bezogen auf Festoffgehalt) wurden mit 1.8 g LiBr bei Raumtemperatur vermischt und nach 3 stündigem Rühren auf den Trennpapierträger aufgetragen. Nach dem Verdampfen des Lösungsmittels bei 120°C wurde anschliessend mit ES bei unterschiedlichen Dosen (0, 20 oder 30 kGy) gehärtet. Anschliessend wurde mit den Testmethoden A, B, C ausgeprüft. Weiterhin wurde eine unvernetzte Probe für Testmethode D vorbereitet.

Beispiel 1Na

100 g des Polymers Beispiel 1 (bezogen auf Festoffgehalt) wurden mit 3.0 g LiBr bei Raumtemperatur vermischt und nach 3 stündigem Rühren auf den Trennpapierträger aufgetragen. Nach dem Verdampfen des Lösungsmittels bei 120°C wurde anschliessend mit ES bei unterschiedlichen Dosen (20 oder 30 kGy) gehärtet. Anschliessend wurde mit den Testmethoden A, B, C ausgeprüft. Weiterhin wurde eine unvernetzte Probe für Testmethode D vorbereitet.

Beispiel 1Ca

100 g des Polymers Beispiel 1 (bezogen auf Festoffgehalt) wurden mit 3.9 g $CaBr_2$ bei Raumtemperatur vermischt und nach 3 stündigem Rühren auf den Trennpapierträger aufgetragen. Nach dem Verdampfen des Lösungsmittels bei 120°C wurde anschliessend mit ES bei unterschiedlichen Dosen (20 oder 30 kGy) gehärtet. Anschliessend wurde mit den Testmethoden A, B, C ausgeprüft. Weiterhin wurde eine unvernetzte Probe für Testmethode D vorbereitet.

Beispiel 1Zn

100 g des Polymers Beispiel 1 (bezogen auf Festoffgehalt) wurden mit 2.8 g $ZnBr_2$ bei Raumtemperatur vermischt und nach 3 stündigem Rühren auf den Trennpapierträger aufgetragen. Nach dem Verdampfen des Lösungsmittels bei 120°C wurde anschliessend mit ES bei unterschiedlichen Dosen (20 oder 30 kGy) gehärtet. Anschliessend wurde mit den Testmethoden A, B, C ausgeprüft. Weiterhin wurde eine unvernetzte Probe für Testmethode D vorbereitet.

Beispiel 2Ca

100 g des Polymers Beispiel 2 (bezogen auf Festoffgehalt) wurden mit 2.0 g $CaBr_2$ bei Raumtemperatur vermischt und nach 3 stündigem Rühren auf den Trennpapierträger aufgetragen. Nach dem Verdampfen des Lösungsmittels bei 120°C wurde anschliessend mit ES bei unterschiedlichen Dosen (20 oder 30 kGy) gehärtet. Anschliessend wurde mit den Testmethoden A, B, C ausgeprüft.

Beispiel 2Ca#

100 g des Polymers Beispiel 2 (bezogen auf Festoffgehalt) wurden mit 4.0 g $CaBr_2$ bei Raumtemperatur vermischt und nach 3 stündigem Rühren auf den Trennpapierträger aufgetragen. Nach dem Verdampfen des Lösungsmittels bei 120°C wurde anschliessend mit ES bei unterschiedlichen Dosen (20 oder 30 kGy) gehärtet. Anschliessend wurde mit den Testmethoden A, B, C ausgeprüft.

Beispiel 3Ca

100 g des Polymers Beispiel 3 (bezogen auf Festoffgehalt) wurden mit 5.8 g $CaBr_2$ bei Raumtemperatur vermischt und nach 3 stündigem Rühren auf den Trennpapierträger aufgetragen. Nach dem Verdampfen des Lösungsmittels bei 120°C wurde anschliessend mit ES bei unterschiedlichen Dosen (20 oder 30 kGy) gehärtet. Anschliessend wurde mit den Testmethoden A, B, C ausgeprüft.

Beispiel 3Ca#

100 g des Polymers Beispiel 3 (bezogen auf Festoffgehalt) wurden mit 2.9 g $CaBr_2$ bei Raumtemperatur vermischt und nach 3 stündigem Rühren auf den Trennpapierträger aufgetragen. Nach dem Verdampfen des Lösungsmittels bei 120°C wurde anschliessend mit ES bei unterschiedlichen Dosen (20 oder 30 kGy) gehärtet. Anschliessend wurde mit den Testmethoden A, B, C ausgeprüft.

## Patentansprüche

**1.** Haftklebemasse, welche zu wenigstens 50 % folgende copolymerisierte Bestandteile enthält:

(B) Acrylsäure- und/oder Methacrylsäure-Derivate in einem Anteil von 42-96.5 Gewichtsprozent,

$$CH_2=CH(R_1)(CO0R_2) \qquad (I)$$

wobei $R_1$ = H oder $CH_3$ ist und $R_2$ = eine Alkylkette mit 1-20 C-Atomen;
(B) Vinylverbindungen, Acrylate, Methacrylate mit ein oder mehreren Carbonsäuregruppen mit einem Anteil von 0.5 bis 8 Gewichtsprozent
(C) Vinylverbindungen mit funktionellen Gruppen, wie Hydroxygruppen, Sulfonsäuregruppen, Estergruppen, Anhydridgruppen, Epoxygruppen, Photoinitiatoren, Amidgruppen, Aminogruppen, mit Aromaten, Heteroaromaten, Heterocyklen, Ethern, etc. mit einem Anteil von 0-30 Gewichtsprozent,
(E) N-tert,-Butylacrylamid mit einem Anteil von 3-20 Gewichtsprozent;

sowie wenigstens ein in wenigstens einem der vorgenannten Polymere lösliches ein- oder zweiwertiges Metallsalz, -oxid und/oder -hydroxid als chelatisierendes Reagenz.

2. Haftklebemasse nach Anspruch 1, **dadurch gekennzeichnet, dass** das wenigstens eine polymerlösliche ein- oder zweiwertige Metallsalz, oxid und/oder -hydroxid im Verhältnis von 1:5 bis 5:1 zu dem jeweiligen molaren Carbonsäureanteil im Gesamtpolymergehalt vorliegt.

3. Haftklebemasse nach Anspruch 1 oder 2, **dadurch gekennzeichnet, dass** das Salz oder die Salze aus den Gruppen I A, II A, II B, I B und IV B des Periodensystems ausgewählt sind, insbesondere aus Salzen, Oxiden, Hydroxiden und/oder Alkoxiden der Metalle Lithium, Natrium, Kalium, Calcium, Magnesium, Titan, Zink, Zirkonium, Barium, Cadmium, Strontium, vorzugsweise aus Halogeniden, Silikaten, oder Salzen organischer Säuren der genannten Metalle.

4. Haftklebemasse nach einem der Ansprüche 1 bis 3, **dadurch gekennzeichnet, dass** der Gewichtsanteil des Salzes zwischen 0.25 bis 8 Gewichtsanteilen, weiter vorzugsweise zwischen 3 und 6 Gewichtsanteilen bezogen auf das Polyacrylat beträgt.

5. Haftklebemasse nach einem der Anspruche 1 bis 4, **dadurch gekennzeichnet, dass** die Vinyiverbindung/en ausgewählt ist/sind aus Maleinsäureanhydrid, Styrol, Styrol-Derivaten, Vinylacetat, acrylierten Photoinitiatoren, Tetrahydrofurylacrylaten.

6. Haftklebemasse nach einem der Ansprüche 1 bis 5, **dadurch gekennzeichnet, dass** sie zusätzlich einen Vernetzer enthält, insbesondere einen UV- oder ES- aktivierbaren Vernetzer.

7. Haftklebemasse nach einem der Ansprüche 1 bis 6, **dadurch gekennzeichnet, dass** sie zusätzlich weitere Zusatz- und Hilfsstoffe, insbesondere Harze, Weichmacher und/oder Füllstoffe enthält.

8. Haftklebemasse nach einem der Ansprüche 1 bis 7, **dadurch gekennzeichnet, dass** sie mit wenigstens einem weiteren Polymer oder Copolymer, vorzugsweise einem weiteren selbst haftklebrigen Polymer, abgemischt ist.

9. Haftttlebeartikel, die einen wenigstens einseitig bereichsweise mit einer Haftklebemasse nach einem der Ansprüche 1 bis 8 beschichteten Träger aufweisen.

10. Haftklebeartikel nach Anspruch 9, **dadurch gekennzeichnet, dass** der Träger folien- oder bandförmig und der Haftklebeartikel eine Haftklebefolie oder ein Haftklebeband ist.

11. Verfahren zur Verarbeitung der Haftklebemasse nach einem der Ansprüche 5 bis 8 in einem Heißschmelzverfahren, **dadurch gekennzeichnet, dass** die Haftklebemasse in der Schmelze auf einen Träger aufgebracht und anschließend UV-gehärtet wird.

12. Verfahren zur Verarbeitung der Haftklebemasse nach einem der Ansprüche 5 bis 8 in einem Heißschmelzverfahren, **dadurch gekennzeichnet, dass** die Haftklebemasse in der Schmelze auf einen Träger aufgebracht und anschließend etektronenstrahlgehäriet (ESHbehandelt) wird.

13. Verfahren nach Anspruch 12, **dadurch gekennzeichnet, dass** die Dosis der Elektronenstrahlhärtung der Haftklebebänder gegenüber konventioneller Härtung herabgesetzt wird, vorzugsweise auf Dosen zwischen 10 und 100 kGy, vorzugsweise 15 bis 35 kGy, weiter vorzugsweise um 20 kGy, bei einer Beschleunigungsspannung zwischen 80 und 300 kV.

## Claims

1. Pressure-sensitive adhesive which comprises to an extent of at least 50% the following copolymerized constituents:

(B) acrylic and/or methacrylic acid derivatives in a fraction of 42-96.5 percent by weight,

$$CH_2=C(R_1)(COOR_2) \quad (I)$$

where $R_1$ = H or $CH_3$ and $R_2$ = an alkyl chain having 1-20 carbon atoms;
(B) vinyl compounds, acrylates, methacrylates containing one or more carboxylic acid groups, with a fraction of 0.5 to 8 percent by weight,
(C) vinyl compounds containing functional groups, such as hydroxyl groups, sulfonic acid groups, ester groups, anhydride groups, epoxy groups, photoinitiators, amide groups, amino groups, with aromatics, heteroaromatics, heterocycles, ethers, etc., with a fraction of 0-30 percent by weight,
(E) N-tert-butylacrylamide, with a fraction of 3-20 percent by weight;

and also at least one monovalent or divalent metal salt, metal oxide and/or metal hydroxide which is soluble in at least one of the aforementioned polymers, as chelatizing reagent.

**2.** Pressure-sensitive adhesive according to Claim 1, **characterized in that** the at least one polymer-soluble monovalent or divalent metal salt, metal oxide and/or metal hydroxide is present in a ratio of 1:5 to 5:1 with respect to the respective molar fraction of carboxylic acid in the overall polymer content.

**3.** Pressure-sensitive adhesive according to Claim 1 or 2, **characterized in that** the salt or salts are selected from groups I A, II A, II B, I B and IV B of the Periodic Table, in particular from salts, oxides, hydroxides and/or alkoxides of the metals lithium, sodium, potassium, calcium, magnesium, titanium, zinc, zirconium, barium, cadmium, strontium, preferably from halides, silicates, or salts of organic acids of said metals.

**4.** Pressure-sensitive adhesive according to any one of Claims 1 to 3, **characterized in that** the weight fraction of the salt is between 0.25 to 8 weight fractions, with further preference between 3 and 6 weight fractions, relative to the polyacrylate.

**5.** Pressure-sensitive adhesive according to any one of Claims 1 to 4, **characterized in that** the vinyl compound/s is/are selected from maleic anhydride, styrene, styrene derivatives, vinyl acetate, acrylated photoinitiators, tetrahydrofuryl acrylates,

**6.** Pressure-sensitive adhesive according to any one of Claims 1 to 5, **characterized in that** it additionally comprises a crosslinker, in particular a UV- or EB-activable crosslinker.

**7.** Pressure-sensitive adhesive according to any one of Claims 1 to 6, **characterized in that** it additionally comprises further additives and auxiliaries, especially resins, plasticizers and/or fillers.

**8.** Pressure-sensitive adhesive according to any one of Claims 1 to 7, **characterized in that** it has been blended with at least one further polymer or copolymer, preferably a further polymer which is itself pressure-sensitively adhesive.

**9.** Pressure-sensitive adhesive article which has a backing coated at least on one side in regions with a pressure-sensitive adhesive according to any one of Claims 1 to 8.

**10.** Pressure-sensitive adhesive article according to Claim 9, **characterized in that** the backing is in sheet or tape form and the pressure-sensitive adhesive article is a pressure-sensitive adhesive sheet or pressure-sensitive adhesive tape.

**11.** Method of processing Pressure-sensitive adhesive according to any of Claims 5 to 8 in a hotmelt process, **characterized in that** the pressure-sensitive adhesive is applied in the melt to a backing and then UV-cured.

**12.** Method of processing Pressure-sensitive adhesive according to any of Claims 5 to 8 in a hotmelt process, **characterized in that** the pressure-sensitive adhesive is applied in the melt to a backing and then electron beam-cured (EBC-treated).

**13.** Method according to Claim 12, **characterized in that** the dose for the electron beam curing of the pressure-sensitive adhesive tapes is lowered as compared with conventional curing, preferably to doses between 10 and 100 kGy, preferably 15 to 35 kGy, with further preference around 20 kGy, for an acceleration voltage of between 80 and 300 kV.

## Revendications

1. Masse autoadhésive qui contient, à raison d'au moins 50%, les constituants copolymérisés suivants :

   (A) des dérivés de l'acide acrylique et/ou de l'acide méthacrylique en une proportion de 42-96,5% en poids,

   $$CH_2=C(R_1)\ (COOR_2) \qquad (I)$$

   où $R_1$ = H ou $CH_3$ et $R_2$ = une chaîne alkyle comprenant 1-20 atomes de carbone ;
   (B) des composés de vinyle, des acrylates, des méthacrylates comprenant un ou plusieurs groupes acide carboxylique en une proportion de 0,5 à 8% en poids
   (C) des composés de vinyle avec des groupes fonctionnels, tels que des groupes hydroxy, acide sulfonique, ester, anhydride, époxy, des photo-initiateurs, des groupes amide, amino, avec des aromatiques, des hétéroaromatiques, des hétérocycles, des éthers etc. en une proportion de 0-30% en poids,
   (E) du N-tert-butylacrylamide en une proportion de 3-20% en poids ;

   ainsi qu'au moins un sel, un oxyde et/ou un hydroxyde métallique monovalent ou divalent, soluble dans au moins un des polymères susmentionnés, comme réactif chélatant.

2. Masse autoadhésive selon la revendication 1, **caractérisée en ce que** ledit au moins un sel, oxyde et/ou hydroxyde métallique monovalent ou divalent, soluble dans le polymère se trouve dans un rapport de 1:5 à 5:1 à la proportion molaire d'acide carboxylique dans la teneur totale en polymère.

3. Masse autoadhésive selon la revendication 1 ou 2, **caractérisée en ce que** le ou les sels sont choisis dans les groupes IA, IIA, IIB, IB et IVB du système périodique des éléments, en particulier parmi les sels, oxydes, hydroxydes et/ou alcoxydes des métaux lithium, sodium, potassium, calcium, magnésium, titane, zinc, zirconium, baryum, cadmium, strontium, de préférence parmi les halogénures, les silicates, ou les sels d'acides organiques des métaux mentionnés.

4. Masse autoadhésive selon l'une quelconque des revendications 1 à 3, **caractérisée en ce que** la proportion en poids du sel est comprise entre 0,25 et 8 parties en poids, plus préférablement entre 3 et 6 parties en poids, par rapport au polyacrylate.

5. Masse autoadhésive selon l'une quelconque des revendications 1 à 4, **caractérisée en ce que** le ou les composés de vinyle sont choisis parmi l'anhydride de l'acide maléique, le styrène, les dérivés du styrène, l'acétate de vinyle, les photo-initiateurs acrylés, les acrylates de tétrahydrofurfuryle.

6. Masse autoadhésive selon l'une quelconque des revendications 1 à 5, **caractérisée en ce qu'**elle contient en outre un réticulant, en particulier un réticulant activable par un rayonnement UV ou un rayonnement électronique (RE).

7. Masse autoadhésive selon l'une quelconque des revendications 1 à 6, **caractérisée en ce qu'**elle contient en outre d'autres additifs et adjuvants, en particulier des résines, des plastifiants et/ou des charges.

8. Masse autoadhésive selon l'une quelconque des revendications 1 à 7, **caractérisée en ce qu'**elle est mélangée avec au moins un autre polymère ou copolymère, de préférence avec un autre polymère autoadhésif.

9. Objets autoadhésifs, qui présentent un support revêtu sur au moins une face par une masse autoadhésive selon l'une quelconque des revendications 1 à 8.

10. Objet autoadhésif selon la revendication 9, **caractérisé en ce que** le support est en forme de feuille ou de bande et que l'objet autoadhésif est une feuille autoadhésive ou une bande autoadhésive.

11. Procédé pour la transformation de la masse autoadhésive selon l'une quelconque des revendications 5 à 8 dans un procédé de masse fondue à chaud, **caractérisé en ce que** la masse autoadhésive est appliquée sous forme de masse fondue sur un support et est ensuite durcie par un rayonnement UV.

12. Procédé pour la transformation de la masse autoadhésive selon l'une quelconque des revendications 5 à 8 dans un procédé de masse fondue à chaud, **caractérisé en ce que** la masse autoadhésive est appliquée sous forme

de masse fondue sur un support et est ensuite durcie par un rayonnement électronique (traitée pour un durcissement par un rayonnement électronique - DRE).

**13.** Procédé selon la revendication 12, **caractérisé en ce que** la dose du durcissement par un rayonnement électronique des bandes autoadhésives est diminuée par rapport à un durcissement classique, de préférence à des doses entre 10 et 100 kGy, de préférence de 15 à 35 kGy, plus préférablement de 20 kGy, à une tension d'accélération entre 80 et 300 kV.

Abbildung 1: Temperatursweep bei konstanter Frequenz (s. Testmethode D)

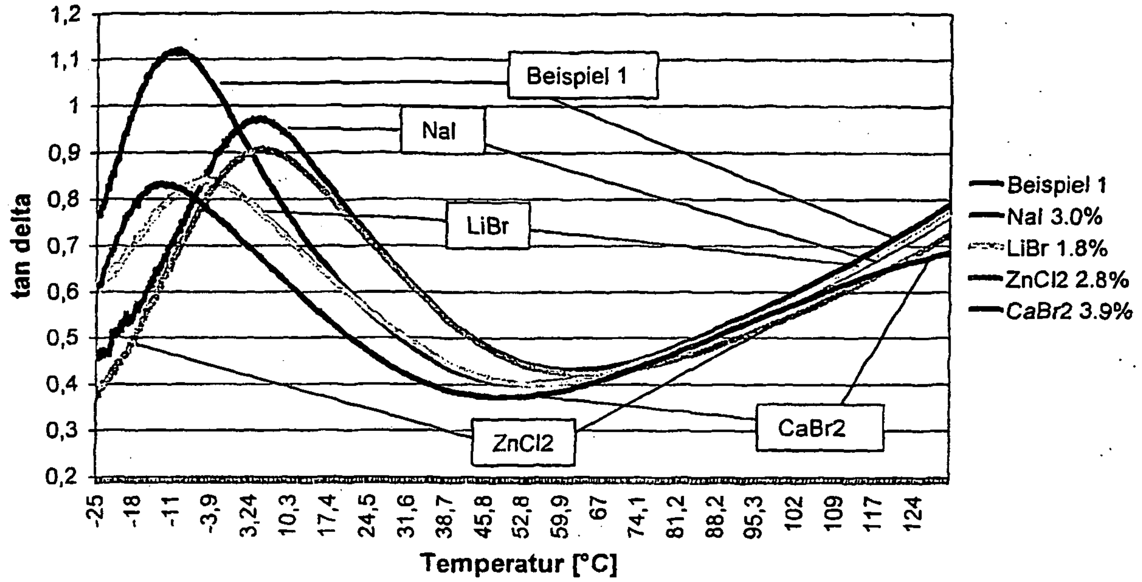


Abbildung 2: Frequenzsweep bei 130°C (s. Testmethode D)

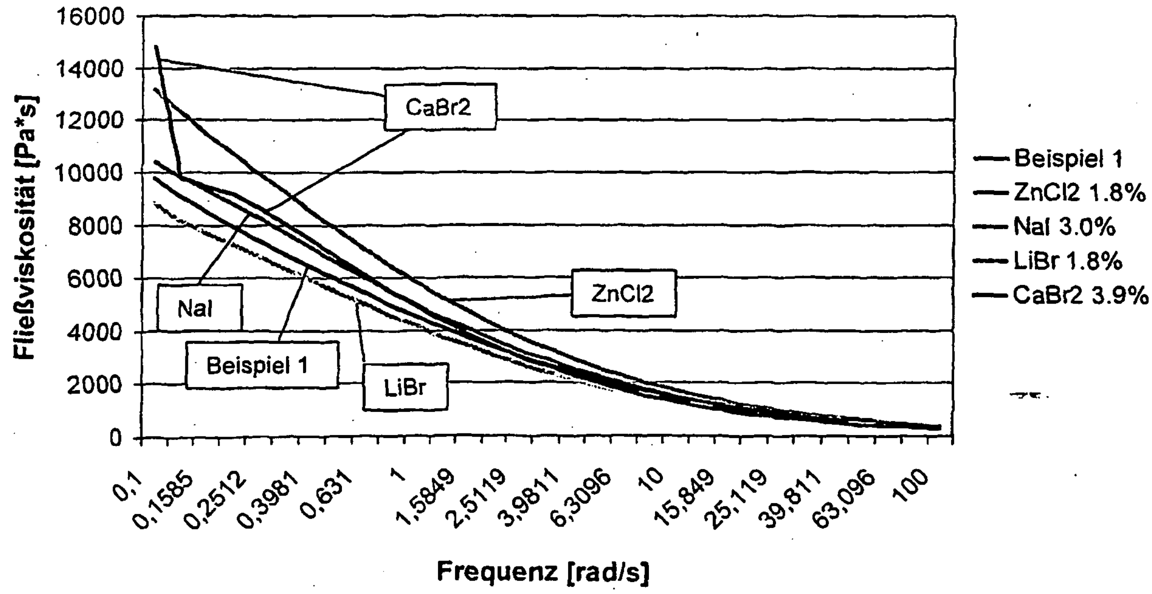

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- NL 6606711
- NL 7009629
- DE 2743979, Guse
- US 5073611 A, Rehmer
- EP 343467 B1
- WO 9635725 A, Ang
- WO 1995 A
- US 5194455 A, Massow
- US 4354008 A
- US 4360638 A
- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A1
- EP 850957 A1
- US 5945491 A
- US 5854364 A
- US 5789487 A


### In der Beschreibung aufgeführte Nicht-Patentliteratur


- **DONATAS SATAS.** Handbook of Pressure Sensitive Adhesive Technology. van Nostrand, 1989
- Photoinititation, Photopolymerization and Photocuring: Fun- damentals and Applications. **FOUASSIER.** Photoinititation, Photopolymerization and Photocuring: Fundamentals and Applications. Hanser-Verlag, 1995
- **CARROY et al.** Chemistry and Technology of UV and EB Formulation for Coatings, Inks and Paints. 1994
- **T.G. FOX.** *Bull. Am. Phys. Soc.,* 1956, vol. 1, 123
- **HOUBEN WEYL.** *Methoden der Organischen Chemie,* vol. 19a, 60-147
- *Macromolecules,* 1995, vol. 28, 7886
- **HAWKER.** *Beitrag zur Hauptversammlung der American Chemical Society,* 1997
- **HUSEMANN.** *Beitrag zum IUPAC World-Polymer Meeting,* 1998
- **DONATAS SATAS.** *Handbook of Pressure Sensitive Adhesive Technology,* 1989
- Skelhorne, Electron Beam Processing, in Chemistry and Technology of UV and EB formulation for Coatings. *Inks and Paints,* 1991, vol. 1